# DEMANDE DE BREVET EUROPEEN

(11) **EP 1 170 883 A2**
(43) Date de publication de la demande: **09.01.2002**
(21) Numéro de dépôt: 01201666.3
(22) Date de dépôt: 08.05.2001
(51) Int. Cl.: H04B 7/26, H04B 7/005

(54) **Système de transmission de type AMRC, appareil de réception et procédé de synchronisation associés**

(30) Priorité: 16.05.2000 FR 0006227
(71) Demandeur: Koninklijke Philips Electronics N.V., 5621 BA Eindhoven (NL)
(72) Inventeur: Khalifa, Nabil, 75008 Paris (FR)
(74) Mandataire: Chaffraix, Jean

(57) **Abrégé**

Ce système de transmission de données, satisfaisant une spécification du type 3G TS 25.211 et utilisant des codes d'étalement de spectre est formé d'au moins une partie émission (10) pour émettre les données en utilisant des codes d'étalement de spectre et d'au moins une partie réception (20) pour recevoir lesdites données. Dans ce système, des premières données sont émises durant un laps de temps relativement long sur le canal CPICH, tandis que des deuxièmes données sont émises sur le canal SCH durant un laps de temps relativement court. On propose que les deuxièmes données soient émises durant des interruptions d'émission des premières données, ou alors avec une atténuation de cette émission.

Application aux réseaux de radiotéléphonie.

## Description

L'invention concerne un système de transmission de données utilisant des codes d'étalement de spectre formé d'au moins une partie émission pour émettre les données en utilisant des codes d'étalement de spectre et d'au moins une partie réception pour recevoir lesdites données, système selon lequel des premières données sont émises durant un laps de temps relativement long, tandis que des deuxièmes données sont émises durant un laps de temps relativement court.

L'invention concerne aussi un appareil de réception convenant à un tel système.

L'invention concerne encore un procédé de synchronisation opérant sur des données transmises au moyen de codes d'étalement de spectre. Ceci est mieux connu sous le nom de CDMA.

L'invention trouve d'importantes applications notamment pour des systèmes de télécommunications répondant aux spécifications données dans le document : 3G TS 25.211 édité par :
" 3GPP Support Office Address "
650, Route des Lucioles - Sophia Antipolis
06560 Valbonne- FRANCE

Selon ces spécifications, pour obtenir la synchronisation des parties émission et des parties réception, on émet deux sortes d'informations : une première, émise continûment sur un canal CPICH ( canal de pilotage commun) et une deuxième, émise durant une petite partie des canaux de données, sur un canal de synchronisation proprement dit SCH.

Lorsque la transmission devient difficile, notamment à cause des trajets multiples que parcourent les ondes de transmission, la synchronisation risque de ne plus pouvoir s'effectuer.

La présente invention propose un système du genre mentionné dans le préambule, qui permet d'améliorer dans une large mesure la prise de synchronisation pour des conditions difficiles.

Pour cela, un tel système est remarquable en ce que les deuxièmes données sont émises durant une atténuation de l'émission des premières données.

Il est à noter que cette atténuation peut aller jusqu'à l'extinction complète de l'émission des premières données.

Un procédé de synchronisation pour des données transmises au moyen de codes d'étalement de spectre est remarquable en ce que l'on crée des interruptions d'émission des premières données pour émettre les deuxièmes données.

L'idée de l'invention consiste donc à atténuer un court instant l'émission des premières données ce qui n'apporte pratiquement aucune influence néfaste au processus de synchronisation. En outre, il n'y a aucune influence sur l'estimation du canal qui consiste à établir ses caractéristiques en amplitude et en phase. Cette courte interruption évite alors le brouillage apporté sur les deuxièmes données, ce qui permet aux parties réception de mieux les discerner parmi les signaux reçus. En effet il faut bien considérer le fait que les codes d'étalement de spectre ne sont pas toujours parfaitement orthogonaux entre eux.

La description suivante, faite en regard des dessins ci-annexés, le tout donné à titre d'exemples non limitatifs fera bien comprendre comment l'invention peut être réalisée. Sur les dessins :
La figure 1 montre un système conforme à l'invention,
La figure 2 montre un diagramme temps explicitant l'organisation des trames d'émission de canaux,
La figure 3 montre l'allure des signaux reçus sans mise en oeuvre de l'invention,
La figure 4 montre l'allure des signaux reçus avec mise en oeuvre de l'invention.

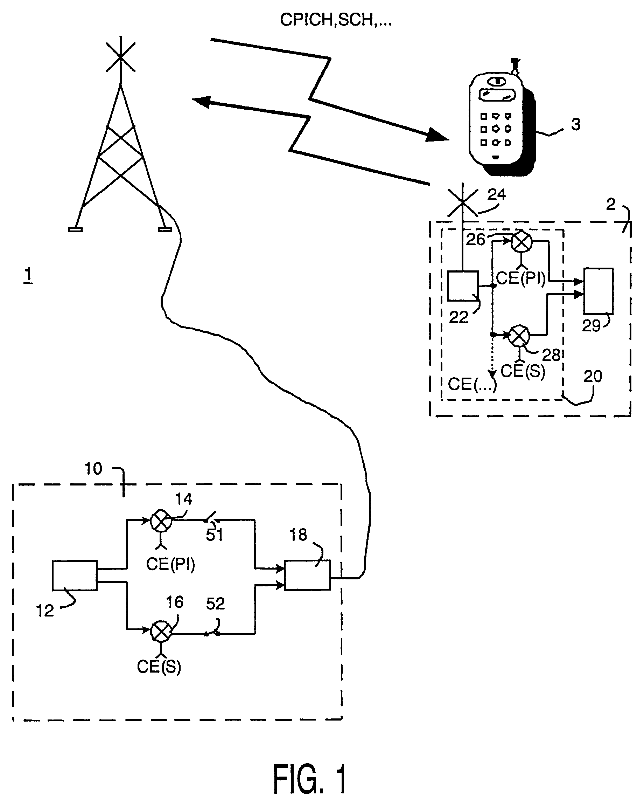

A la figure 1, on a représenté un système conforme à l'invention. La référence 1 indique une station de base et les références 2 et 3, des stations mobiles. La station de base 1 comporte une partie émission dont un bloc 10 est montré à la figure 1. Ce bloc comporte un générateur de données de synchronisation 12. Ce générateur fournit les données pour les canaux CPICH et SCH définis dans la spécification précitée. Ces canaux sont émis en utilisant des codes d'étalement du spectre CE(PI) pour le canal CPICH durant des laps de temps longs et le code CE(S) pour le canal SCH pendant des laps de temps plutôt courts. Ces codes CE(PI) et CE(S) sont multipliés par les multiplicateurs 14 et 16 respectivement au flux de données des canaux CPICH et CE(S) fournis par le générateur 12. Comme ces codes CE(PI) et CE(S) sont pratiquement orthogonaux entre eux, il est possible de les combiner en émission ce qui est fait dans le circuit 18.

La partie réception 20 de la station mobile 2 comporte un circuit de réception 22 qui traite les signaux reçus par l'antenne 24 et fournit un train de données que l'on peut trier en utilisant des décorrélateurs 26 et 28 et autres pour chacun des canaux transmis. Ces décorrélateurs opèrent à partir des codes d'étalement affectés à chacun de ces canaux, notamment les codes CE(PI) et CE(S) précités. D'autres codes CE(...) sont utilisés pour les autres canaux. Les données ainsi démultiplexées sont fournies à un circuit de traitement 29 pour une utilisation normale du mobile.

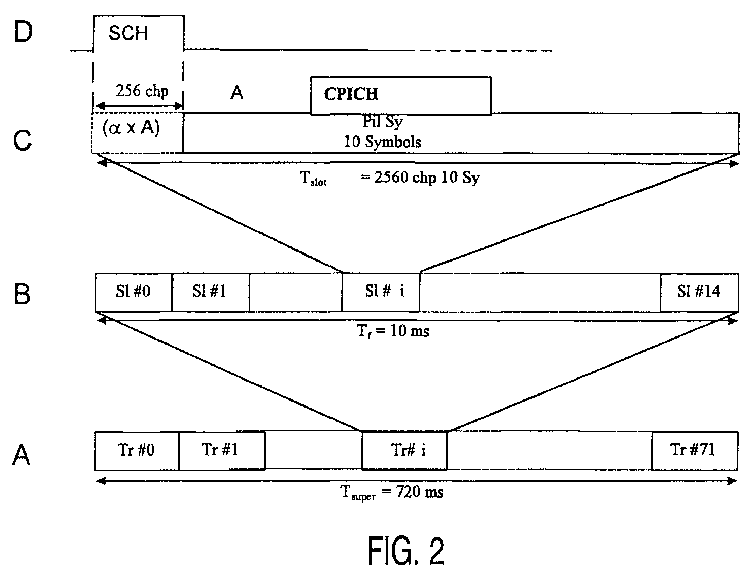

La figure 2 explicite l'organisation en trames des signaux émis conformément à la spécification précitée.

En A, on a représenté la super trame du canal CPICH qui dure un temps :
Tₛᵤₚₑᵣ = 720ms et qui comporte 72 trames numérotées Tr#0 à Tr#71.

En B, on a représenté la structure desdites trames, elle se compose de tranches de temps référencées par SI#0 à SI#14 dont chacune dure un temps : T_{f} = 10 ms.

En C, on montre la structure de ces tranches de temps qui contiennent des symboles, ces symboles sont combinés avec des éléments binaires (chp) de plus courtes durées constituant le code d'étalement (CE(PI)). Ces éléments binaires de courtes durée sont mieux connus sous le nom anglo-saxon de " chip ".

En D, on a représenté l'émission sur le canal SCH des informations de synchronisation.

Conformément à l'invention, lorsqu'il y a émission sur le canal SCH, il y a émission atténuée ou une extinction de cette émission sur le canal CPICH dont la valeur nominale est A ; ceci est indiqué par αx A à la ligne C. Cette durée est égale à un symbole ou 256 chp.

A la figure 1, on a représenté par des interrupteurs 51 et 52 cette fonction d'émission et de non-émission. Ainsi, l'interrupteur 51 est ouvert pour interdire toute émission sur le canal CPICH lorsqu'il y a émission sur le canal SCH, l'interrupteur 52 est alors fermé.

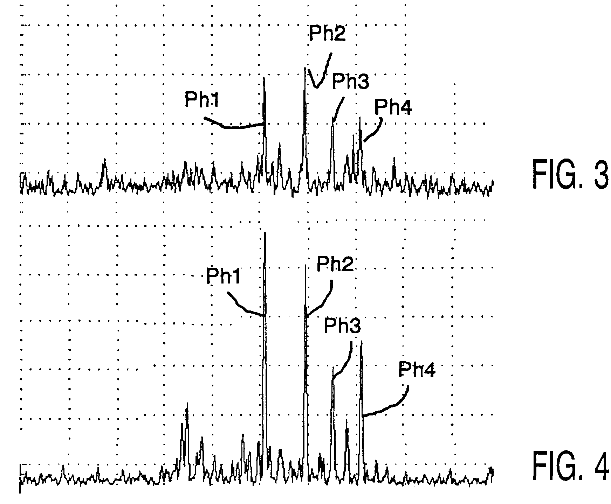

La figure 3 montre l'allure du signal reçu, transmis par le canal SCH, sans appliquer les mesures préconisées par l'invention. Ce signal est reçu en empruntant quatre trajets principaux Ph1, Ph2, Ph3 et Ph4.

La figure 4 montre l'allure de ce même signal reçu, transmis par le canal SCH, en appliquant les mesures préconisées par l'invention, toutes choses étant égales par ailleurs. On se rend alors compte de l'effet obtenu par l'invention. Les pics relatifs aux différents chemins Ph1, Ph2, Ph3 et Ph4 sont bien plus apparents que ceux obtenus sans la mise en oeuvre de l'invention.

## Revendications

1. Système de transmission de données utilisant des codes d'étalement de spectre formé d'au moins une partie émission pour émettre les données en utilisant des codes d'étalement de spectre et d'au moins une partie réception pour recevoir lesdites données, système selon lequel des premières données sont émises durant un laps de temps relativement long, tandis que des deuxièmes données sont émises durant un laps de temps relativement court, **caractérisé en ce que** les deuxièmes données sont émises durant une atténuation de l'émission des premières données

2. Système de transmission selon la revendication 1, **caractérisé en ce que** la valeur de l'atténuation équivaut à une extinction de l'émission.

3. Système de transmission selon la revendication 1 satisfaisant une spécification du type 3G TS 25.211, **caractérisé en ce que** les premières données concernent le canal CPICH et les deuxièmes le canal SCH.

4. Appareil de réception convenant à un système selon la revendication 1 ou 2, ou 3, comprenant une partie réception, **caractérisé en ce qu'**il comporte des décorrélateurs opérant avec lesdits codes d'étalement pour reconstituer les données transmises.

5. Procédé de synchronisation opérant sur des données transmises au moyen de codes d'étalement de spectre mis en oeuvre dans un système selon la revendication 1 ou 2, ou 3, dans lequel des premières données sont émises durant un laps de temps relativement long, tandis que des deuxièmes données sont émises durant un laps de temps relativement court, **caractérisé en ce que** l'on crée des atténuations d'émission des premières données pour émettre les deuxièmes données.

6. Procédé de synchronisation selon la revendication 5, **caractérisé en ce que** la valeur de l'atténuation équivaut à une extinction de l'émission.
